# EUROPÄISCHE PATENTSCHRIFT

(11) **EP 1 983 629 B1**
(45) Veröffentlichungstag und Bekanntmachung des Hinweises auf die Patenterteilung: **16.12.2009**
(21) Anmeldenummer: 07007827.4
(22) Anmeldetag: 17.04.2007
(51) Int. Cl.: H02G 15/04, H02G 3/06

(54) **Kabelverschraubung**
Cable gland
Presse-étoupe de câble

(43) Veröffentlichungstag der Anmeldung: 22.10.2008
(73) Patentinhaber: SCHLEMMER GMBH, 85586 Poing (DE)
(72) Erfinder: Hausfelder, Norbert, 85586 Poing/Angelbrechting (DE)
(74) Vertreter: Geyer, Fehners & Partner

(56) Entgegenhaltungen:
- EP-A1- 0 901 209
- EP-A2- 0 750 376
- DE-B- 1 074 112
- DE-U1- 29 715 810
- GB-A- 2 280 317
- US-A- 4 150 250

## Beschreibung

Die Erfindung bezieht sich auf eine Kabelverschraubung mit einer elektrisch leitenden Aufnahmehülse und einer auf diese aufschraubbaren Gegenhülse, insbesondere einem Druckelement, und mit einem in die Aufnahmehülse eingesteckten Klemmring, der in Umfangsrichtung nebeneinander liegende, axial ausgerichtete, jeweils voneinander durch axial verlaufende Schlitze getrennte Klemmzungen aufweist, die beim Aufschrauben der Gegenhülse auf die Aufnahmehülse von dieser unter Verkleinerung der Schlitze mit ihren freien Enden radial nach innen gebogen werden, wobei im Klemmring ein elastisches, ringförmiges Dichtungselement sitzt, das beim Einbiegen der Klemmzungen gegen die Außenfläche eines durch die Kabelverschraubung hindurchgeführten Kabels dichtend anpreßbar ist, und mit einem in Inneren der Aufnahmehülse sitzenden, elektrisch leitfähigen Kontaktelement, das mit der Aufnahmehülse in elektrisch leitender Verbindung steht und Kontaktbügel aufweist, die mit einem Schirm- oder Erdungskontakt des durch die Kabelverschraubung hindurchgeführten Kabels in Kontakt bringbar sind.

Solche Kabelverschraubungen sind dazu vorgesehen, Erdungs- oder Abschirmkabel durch Gehäuse- oder Schaltschrankwandungen o. ä. hindurchzuführen, wobei zum Ableiten von Leitungsstörungen vom Leitungsschirm eine elektrische Verbindung zwischen dem Schirmgeflecht des Kabels und dem Verschraubungskörper der Kabelverschraubung hergestellt wird.

Aus der EP 0 598 261 B1 ist eine Kabelverschraubung mit einem Klemmeinsatz aus isolierendem Kunststoff bekannt, der umgebogene Drähte des Drahtgeflechtes des hindurchgeführten Kabels derart erfaßt, daß diese in Gebrauchsstellung zwischen Klemmeinsatz und aufzuschraubender Gegenhülse eingeklemmt werden. Hierdurch läßt sich zwar ein guter Kontakt zwischen den Drähten und der Gegenhülse erreichen. Das Umbiegen der Drähte des Drahtgeflechtes und deren Einbringen zwischen den Klemmeinsatz und die Gegenhülse sowie deren Unterbringen dort ist jedoch mit einem merklichen Aufwand verbunden, der das Anbringen dieser bekannten Kabelverschraubung in der Praxis deutlich verkompliziert.

Die DE 23 48 882 A beschreibt eine Kabelverschraubung, die mit einem Klemmeinsatz arbeitet, der durch ein Blechbiegeteil gebildet wird, das zu einem einseitig offenen Ring geformt ist, der sich von einer mittleren Zone größerer Dicke zu seinen Stirnseiten hin verjüngt. Der Ring weist einen Klemmbereich auf, an dem er über ringförmige Schultern an der aufzuschraubenden Gegenhülse gegen die Kabeloberfläche gedrückt wird. Mittels einer Schulter in der Aufnahmehülse wird der entgegensetzte Bereich des Ringes gegen den abisolierten Abschnitt des Kabels angelegt. Nachteilig hierbei ist, daß die Biegeelastizität des Blechringes im wesentlichen die Größe der Andruckkraft bestimmt, weshalb die für die Zugentlastung des Kabels einsetzbaren Klemmkräfte begrenzt sind. Zudem besteht auch die Gefahr, daß die Blechränder des Ringes beim Verklemmen mit dem isolierten Teil des Kabels die Isolierung beschädigen können. Außerdem ist auch die Verteilung der Andruckkräfte sowohl auf dem isolierten, wie auch auf dem abisolierten Abschnitt des Kabels nicht gleichmäßig. Da der Blechring relativ zur Kabelverschraubung lose angebracht ist und erst nach dem Anziehen der Verschraubung fixiert wird, besteht auch die Gefahr, daß bei der Montage ungewollte axiale Verschiebungen des Klemmeinsatzes nicht ausgeschlossen werden können.

Aus der DE 297 15 810 U1 ist eine Kabelverschraubung für Erdungs- oder Abschirmkabel bekannt, bei der in der Aufnahmehülse ein Klemmring sitzt, der mit axial gerichteten, durch randoffene Schlitze voneinander getrennten Klemmzungen versehen ist. Beim Aufschrauben der Gegenhülse auf die Aufnahmehülse werden die Klemmzungen gegen das innenliegende Kabel verformt und an dieses angedrückt. Der Klemmring besteht aus elektrisch leitendem Material und greift, wenn er verformt wird, an einer abisolierten Zone des durchlaufenden Kabels an, so daß über ihn zwischen dieser und der elektrisch leitenden Aufnahmehülse ein elektrischer Kontakt hergestellt wird. Da die Schlitze im Klemmring jeweils abwechselnd nach der einen und nach der anderen axialen Stirnseite desselben offen und an ihren entgegengesetzten Enden geschlossen sind, wobei sie in axialer Richtung eine Abmessung haben, welche die Hälfte der größten axialen Abmessung des Klemmringes übertrifft, wird erreicht, daß sich der Klemmring bei axialem Druck an beiden Stirnseiten sehr gleichmäßig über seine gesamte Länge einwärts verformt, bis er am Metallgeflecht der abisolierten Zone anliegt. Der Klemmring stützt sich dabei an seiner einen Endseite gegen eine schräge Druckfläche der Aufnahmehülse und an seiner gegenüberliegenden axialen Endseite gegen eine Schrägfläche eines Druckringes ab, der sich seinerseits axial unter Zwischenschaltung einer Dichtung an einem weiteren Druckring abstützt, der wiederum an seinem freien axialen Ende gegen eine Schrägfläche der Gegenhülse anliegt. Wird die Gegenhülse auf die Aufnahmehülse aufgeschraubt, wird der Klemmring über die beiden vorgeschalteten Druckringe unter Zwischenschaltung der Dichtung mit einem Druck in radialer und axialer Richtung beaufschlagt und infolge der beiden Schrägflächen an seinen beiden axialen Enden radial nach innen in Kontakt mit dem abisolierten Abschnitt des Kabels gebracht. Gleichzeitig wird die Dichtung zwischen den beiden vorgeschalteten Druckringen ebenfalls radial nach innen gegen den (isolierten) Außenumfang des Kabels angedrückt.

Bei dieser bekannten Kabelverschraubung ist der radiale Bereich, über den hinweg die Finger des Klemmrings beim Aufschrauben der Gegenhülse radial nach innen verformt werden können, jedoch nur relativ gering, so daß diese bekannte Kabelverschraubung sich nicht für Kabel mit deutlich unterschiedlichen Durchmessern verwenden läßt. Zudem treten, wenn eine große Druckentlastung des in die Kabelverschraubung eingeführten Kabels gewünscht wird, dabei zwangsläufig auch große Kontaktierungskräfte zwischen den Fingern des Klemmrings und dem Schirm- oder Erdungskontakt des eingeführten Kabels auf, die sowohl zu einer Beschädigung der Klemmfinger, wie auch des Schirm- oder Erdungskontaktes des Kabels führen können, weil unter Druck die Klemmfinger des Klemmringes jeweils mit an ihrem vorspringenden Ende angebrachten, radial nach innen gerichteten Vorsprüngen gegen das Kabel gepreßt werden. Dabei wird nahezu die gesamte Kraft der konisch ausgebildeten Druckflächen an der Aufnahme- wie an der Gegenhülse über die auf der jeweiligen Seite vorliegenden radialen Vorsprünge der Klemmfinger an die Anlagestelle am Schirm- oder Erdungskontakt des eingeführten Kabels übertragen, wobei die Vorsprünge in das Kabel einschneiden, was zu einer Beschädigung des Schirm- oder Erdungskontaktes und auch zu einer Beeinträchtigung der Kontaktierung selbst führen kann.

Außerdem ist diese bekannte Kabelverschraubung infolge der Vielzahl der eingesetzten Elemente relativ aufwendig.

Eine hierzu sehr ähnliche Kabelverschraubung der eingangs genannten Art ist aus der EP 0 901 209 B1 bekannt, bei welcher die weiter oben genannten Nachteile im wesentlichen ebenfalls auftreten, wobei allerdings die Anzahl der verwendeten konstruktiven Einzelteile etwas geringer ist.

Aus US-A-4 150 250 ist eine Kabelverschraubung mit einem als Lamellenkäfig ausgebildeten Kontaktelement bekannt. Dieser Lamellenkäfig wird beim Aufschrauben der Gegenhülse über ein Dichtelement mit axialem Druck beaufschlagt und damit so verformt, dass seine mittlere Region in Kontakt mit dem Kabel gebracht wird. Das Dichtelement wird durch einen Klemmring in engem Kontakt mit der Kabeloberfläche gehalten.

Auch aus EP-A2-0 750 376 ist eine Kabelverschraubung mit einem als Lamellenkäfig ausgebildeten Kontaktelement bekannt. In dieser Kabelverschraubung wird der axiale Druck zur Verformung des Lamellenkäfigs durch eine Mittelmutter aufgebracht, die auf die Aufnahmehülse aufschraubbar ist.

Ausgehend hiervon liegt der Erfindung die Aufgabe zugrunde, eine Kabelverschraubung der eingangs genannten Art so zu verbessern, daß sie bei relativ einfachem Aufbau auch für Kabel mit deutlich unterschiedlichen Durchmessern eingesetzt werden kann und auch bei Erreichen einer hohen Druckentlastung des eingeführten Kabels nicht die Gefahr einer Beschädigung des Schirm- oder Erdungskontaktes desselben infolge der auftretenden Kontaktierungskräfte im abisolierten Bereich des Kabels auftritt.

Erfindungsgemäß wird diese Aufgabe durch eine Kabelverschraubung gemäß Anspruch 1 gelöst.

Die erfindungsgemäße Kabelverschraubung bietet durch die Ausbildung des Kontaktelementes als einen im Klemmring angeordneten Lamellenkäfig mit ringförmigen axialen Endbereichen, die durch axial verlaufende, radial einfederbare Lamellenstege miteinander verbunden sind, sich bei axialer Druckbeaufschlagung (bei Aufschrauben der Gegenhülse auf die Aufnahmehülse) unter axialer Verkürzung des Lamellenkäfigs radial nach innen einfedernd durchbiegen und dabei mit dem abisolierten Abschnitt des hindurchgeführten Kabels unter Druck in Kontakt bringbar sind, den großen Vorteil, daß bei dieser Art von Kontaktierung im Kontaktbereich zwischen Lamellen und Schirm- oder Erdungskontakt keinerlei spitze Formgebungen vorliegen, sondern vielmehr eine gerundete Form der eingefederten Lamellen, weshalb keinerlei Gefahr einer Beschädigung am abisolierten Kontaktbereich des Kabels und/oder an den Lamellen besteht. Dennoch kann infolge der Vielzahl der um den Umfang herum verteilten Lamellen des Lamellenkäfigs bei einer geeigneten Ausbildung desselben bzw. derselben eine relativ große Kontaktierungskraft, auch relativ gleichmäßig um den Umfang des Kabels verteilt, aufgebracht werden, so daß mit der erfindungsgemäßen Kabelverschraubung eine durch das Druckelement erzielbare hohe Druckentlastung am Kabel bei gleichzeitig großen Kontaktierungskräften erreicht werden kann.

Daneben kann die erfindungsgemäße Kabelverschraubung auch mittels einer geeigneten Ausgestaltung des Lamellenkäfigs in Verbindung mit einer entsprechenden, beim Aufschrauben der Gegenhülse auf die Aufnahmehülse erzielbaren Größe der axialen Verkürzung desselben für Kabel mit deutlich verschiedenen Durchmessern verwendet werden, was eine große Flexibilität ihres Einsatzes ermöglicht.

Daneben baut die erfindungsgemäße Kabelverschraubung relativ klein und ermöglicht einen stets sicheren und zuverlässigen elektrischen Kontakt am abisolierten Bereich des durchgeführten Kabels.

Bei der erfindungsgemäßen Kabelverschraubung kann der Lamellenkäfig als elektrisch leitendes Element aus jedem diese Funktion sichernden Material bestehen. Besonders bevorzugt wird er jedoch aus einem metallischen Werkstoff gefertigt. Allerdings können auch geeignete Kunststoffe, die elektrisch leitend sind und die erforderlichen elastischen Eigenschaften aufweisen, eingesetzt werden, etwa Kunststoffe mit einer Metallbeschichtung, die in jeder geeigneten Weise, bevorzugt jedoch mittels Metallbedampfung, aufgebracht ist.

Das ringförmige Dichtelement kann bei der erfindungsgemäße Kabelverschraubung in jeder geeigneten, seine Dicht- und Kraftübertragungsfunktion sichernden Art und Weise ausgebildet sein. Ganz besonders bevorzugt wird es jedoch aus Neopren oder aus TPE (Thermoplastisches Elastomer) gefertigt.

Eine besonders bevorzugte Ausgestaltung der erfindungsgemäßen Kabelverschraubung besteht auch darin, daß der Lamellenkäfig an seiner der Gegenhülse abgewandten Stirnseite eine radiale, ringförmig nach außen gerichtete Erweiterung aufweist, mit welcher er die anliegende axiale Stirnseite des Klemmringes radial überdeckt, wobei diese Erweiterung an ihrem radial äußeren Ende in einen in Richtung auf die Gegenhülse zurücklaufenden zylindrischen Abschnitt übergeht, welcher zwischen der Außenumfangsfläche des Klemmringes und der Innenumfangsfläche der Aufnahmehülse angeordnet ist. Bevorzugt verläuft dabei dieser zylindrische Abschnitt umlaufend geschlossen, wobei bei bestimmten Ausführungsformen jedoch auch seine Umfangsfläche mit Ausnehmungen versehen sein kann.

Die Lamellenstege können bei der erfindungsgemäßen Kabelverschraubung in jeder geeigneten Form ausgebildet sein, wobei sie jedoch bevorzugt alle eine gleiche Breite aufweisen. Was ihre Dicke betrifft, so kann es für bestimmte Einsatzfälle bevorzugt werden, daß jeder Lamellensteg eine über seine axiale Länge hinweg variierende Stegdicke aufweist. Besonders bevorzugt wird jeder Lamellensteg jedoch über seine axiale Länge hinweg mit einer konstanten Stegdicke ausgeführt, die, ebenfalls bevorzugt, der radialen Dicke der ringförmigen Endbereiche des Lamellenkäfigs entspricht, so daß dieser insgesamt an allen Stellen eine gleiche Materialdicke zeigt. Besonders bevorzugt ist der Lamellenkäfig einstückig gefertigt.

Weiter bevorzugt weisen alle Lamellenstege, in axialer Richtung gesehen, einen mittleren Bereich größter Einwölbung (radial nach innen hin) schon im unbelasteten Zustand auf. Ganz besonders vorzugsweise ist dieser mittlere Bereich größter radialer Einbuchtung bei allen Lamellenstegen als ein in axialer Richtung über eine bestimmte Länge hinweg zylindrischer Lamellensteg-Abschnitt ausgebildet, wodurch der Vorteil erreicht wird, daß die Kontaktierungskräfte zwischen den Lamellen und dem abisolierten Abschnitt des hindurchgeführten Kabels stets über eine relativ große Fläche übertragen werden können, so daß auf diesem Weg besonders große Kontaktierungskräfte aufbringbar sind, ohne daß die Gefahr einer Beschädigung des Kabels besteht.

Wenn bei der erfindungsgemäßen Kabelverschraubung die Gegenhülse auf die Aufnahmehülse aufgeschraubt wird, wird durch die axiale Aufschraubbewegung von der Gegenhülse in geeigneter Weise, etwa über eine an dieser ausgebildete Schrägfläche, ein axial und radial wirksamer Druck auf die Klemmzungen des Klemmringes gebracht, der dazu führt, daß diese unter Verkleinerung der Schlitze zwischen ihnen mit ihren freien Enden radial nach innen gedrückt werden. Dabei wird das radial innerhalb der Klemmzungen des Klemmringes sitzende elastische, ringförmige Dichtungselement ebenfalls radial nach innen verformt und dabei gegen die Außenfläche eines hindurchgeführten Kabels dichtend angepreßt. Gleichzeitig wird durch die axiale Bewegung der Gegenhülse beim Aufschrauben aber auch ein axial wirksamer Druck über das ringförmige Dichtelement auf den an ihm anliegenden ringförmigen Endbereich des Lamellenkäfigs ausgeübt, dadurch dieser ringförmige Endbereich axial verschoben und damit der Lamellenkäfig entsprechend der Größe der Druckkraft in seiner axialen Erstreckung verkürzt. Diese Verkürzung bewirkt eine zunehmend stärkere, radial nach innen gerichtete Einwölbung der elastisch einfederbaren Lamellenstege in deren axialem Verlauf, die ihrerseits dann gegen den abisolierten Bereich des hindurchlaufenden Kabels unter Druck zu einer kontaktierenden Anlage gelangen.

Dabei besteht eine besonders vorteilhafte Ausgestaltung der erfindungsgemäßen Kabelverschraubung darin, daß beim Aufschrauben der Gegenhülse das Dichtungselement zusammen mit dem Klemmring innerhalb der Aufnahmehülse axial verschoben und dabei der Lamellenkäfig axial verkürzt wird, wobei diese Verschiebbarkeit über einen Bereich hinweg vorliegt, der im wesentlichen der Länge der Verkürzung des Lamellenkäfigs bei voll aufgeschraubter Gegenhülse entspricht.

Eine andere, ebenfalls vorteilhafte Ausgestaltung der erfindungsgemäßen Kabelverschraubung besteht auch darin, daß beim Aufschrauben der Gegenhülse durch diese nicht das Dichtungselement zusammen mit dem Klemmring verschieblich ist, sondern der Klemmring in der Aufnahmehülse axial unverschieblich sitzt und nur das Dichtungselement in ihm axial verschieblich angeordnet ist.

Bei der erfindungsgemäßen Kabelverschraubung ist in die Aufnahmehülse zunächst der Klemmring eingesteckt und innerhalb des Klemmringes das Kontaktelement in Form eines Lamellenkäfigs angebracht. Dies bringt den weiterhin großen Vorteil, daß für Einsatzfälle, in den es auf die elektrische Kontaktierung des hindurchgeführten Kabels in der Kabelverschraubung nicht ankommen sollte, hierfür eine Kabelverschraubung eingesetzt werden kann, die der erfindungsgemäßen Kabelverschraubung, lediglich unter Weglassung des Lamellenkäfigs, entspricht. Dies bedeutet eine erhebliche Vereinfachung in der Herstellung, da für diese beiden unterschiedlichen Kabelverschraubungen keine grundsätzlich unterschiedlichen Konstruktionen eingesetzt werden müssen, was die Produktion deutlich vereinfacht und eine besonders preisgünstige Herstellung zuläßt.

Die Erfindung wird nachfolgend anhand der Zeichnungen im Prinzip beispielsweise noch näher erläutert. Es zeigen:
- Fig. 1: einen Längsschnitt durch eine erfindungsgemäße Kabelverschraubung zu Beginn des Aufschraubens der Gegenhülse, also bei noch unbelastetem Lamellenkäfig;
- Fig. 2: den Querschnitt aus Fig. 1, jedoch mit voll aufgeschraubter Gegenhülse, also im voll belastetem Zustand des Lamellenkäfigs, sowie
- Fig. 3: den Querschnitt aus Fig. 2 mit Darstellung eines hindurchgeführten Kabels.

Die Figuren zeigen eine Kabelverschraubung 1, die eine Aufnahmehülse 2 sowie eine auf diese aufschraubbare Gegenhülse 3 als Druckelement enthält.

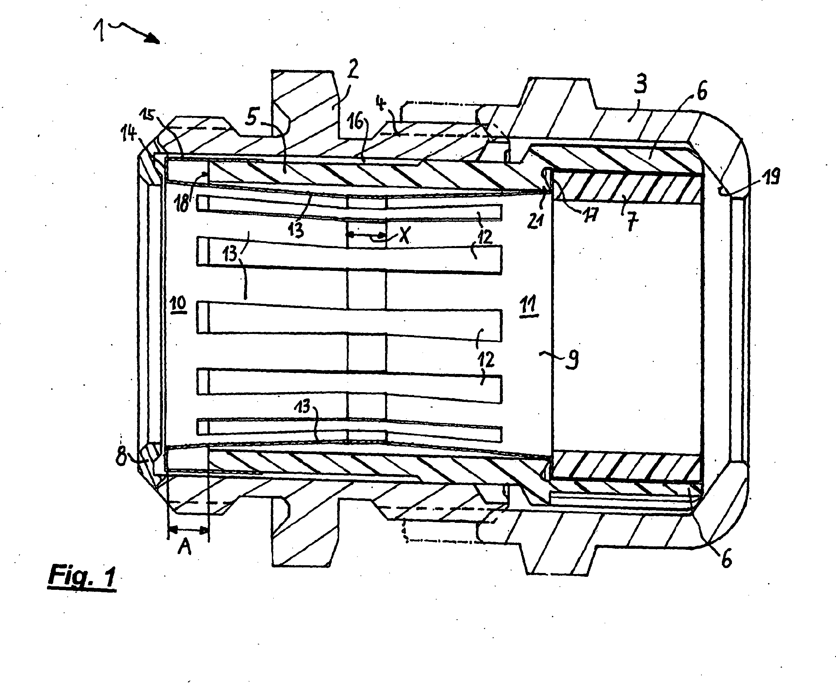

Fig. 1 zeigt einen Längsschnitt durch die Kabelverschraubung 1 in einem Zustand, in dem gerade die Gegenhülse 3 auf ein an der Aufnahmehülse 2 angebrachtes Außengewinde 4 zum Aufschrauben angesetzt ist, also ganz zu Beginn des Aufschraubvorgangs. Dabei ist in Fig. 1 strichpunktiert die Endlage der Gegenhülse 3 im voll aufgeschraubten Zustand dargestellt.

Im Inneren der Aufnahmehülse 2 sitzt axial verschieblich ein Klemmring 5, der auf seiner der Gegenhülse 2 zugewandten Seite einen aus der Aufnahmehülse 2 axial vorstehenden Abschnitt aufweist, der axial in das Innere der Gegenhülse 3 hineinragt und dort über seinen Umfang verteilte und in Umfangsrichtung nebeneinander liegende, axial ausgerichtete, jeweils voneinander durch bis zu seinem vorstehenden axialen Ende verlaufende Schlitze getrennte Klemmzungen 6 ausbildet.

Im axialen Zwischenraum zwischen der elastischen Ringdichtung 7 und einem am entgegengesetzten Ende der Aufnahmehülse 2 an dieser angebrachten Verschlußring 8, der dort in geeigneter (nicht dargestellter) Weise befestigt ist, ist ein Lamellenkäfig 9 angeordnet. Dieser weist zwei ringförmige, axiale Endbereich 10 und 11 auf, die über axial verlaufende, durch axiale Schlitze 12 voneinander getrennte, um den Umfang des Lamellenkäfigs 9 herum angeordnete und ihrerseits in axialer Richtung liegende Lamellenstege 13 einstückig miteinander verbunden sind. Die Lamellenstege 13 sind elastisch und in radialer Richtung nach innen hin ausfederbar ausgebildet, wobei sie, wie Fig. 1 zeigt, bereits im unbelastetem Zustand (also ohne axialen Druck auf den Lamellenkäfig 9) über ihren axialen Verlauf hinweg eine radial nach innen gerichtete Einwölbung ausbilden. Diese Einwölbung ist, wie aus Fig. 1 ebenfalls direkt entnehmbar ist, im axial mittleren Bereich jedes Lamellensteges 13 am größten und verläuft in diesem mittleren Bereich über eine gewisse Länge X hinweg zylindrisch.

An seinem der Gegenhülse 3 abgewandten axialen Ende ist der Lamellenkäfig 9 mit einer radial nach außen gerichteten Erweiterung 14 versehen, deren radiale Länge so groß ist, daß sie die zugewandte Stirnfläche 18 des Klemmringes 5 radial überdeckt, wobei die Erweiterung 14 an ihrem radial außen liegenden Ende in einen zylindrischen Abschnitt 15 übergeht, der in Richtung auf die Gegenhülse 3 axial und mit zylindrischer Außenfläche umläuft, und sich zumindest in seinem dorthin gerichteten Endbereich gegen die radiale Außenfläche des Klemmrings 5 anlegt. Der Klemmring 5 bildet an seinem dem zylindrischen Abschnitt 15 sowie der radialen Erweiterung 14 zugewandten Bereich durch einen radialen Absatz an seinem Außenumfang einen radialen Ringspalt 16 aus, in welchen der zylindrische Abschnitt axial hineinragt und dort gegen die radiale Außenseite des Klemmrings 5 anliegt.

An seinem entgegengesetzten axialen Ende ist der Lamellenkäfig 9 ebenfalls mit einer radial nach außen gerichteten Erweiterung 17 versehen, die gegen einen dort im Klemmring 5 gebildeten radialen Absatz 21 axial anliegt und gegen die die zugewandte axiale Endfläche der elastischen Ringdichtung 7 anliegt, wie dies Fig.1 zeigt.

Der Klemmring 5 sitzt im unbelastetem Zustand des Lamellenkäfigs 9 (entsprechend Fig. 1) so im Inneren der Aufnahmehülse 2, daß seine axiale Stirnfläche 18, die dem Verschlußring 8 zugewandt ist, in einem Abstand **A** von der zugewandten Radialfläche der radialen Erweiterung 14 entfernt ist.

Der Lamellenkäfig 9 besteht ebenso wie der Klemmring 5 aus einem elektrisch leitfähigen Material, wobei für den Lamellenkäfig bevorzugt ein metallischer Werkstoff eingesetzt wird, während der Klemmring z. B. aus einem metallisierten oder elektrisch leitenden Kunststoff besteht, vorzugsweise ein solcher mit einer aufgedampften Metallbeschichtung, besonders bevorzugt jedoch ein verzinnter Kunststoff. Jedoch sind auch andere elektrisch leitende Werkstoffe grundsätzlich gleichermaßen einsetzbar.

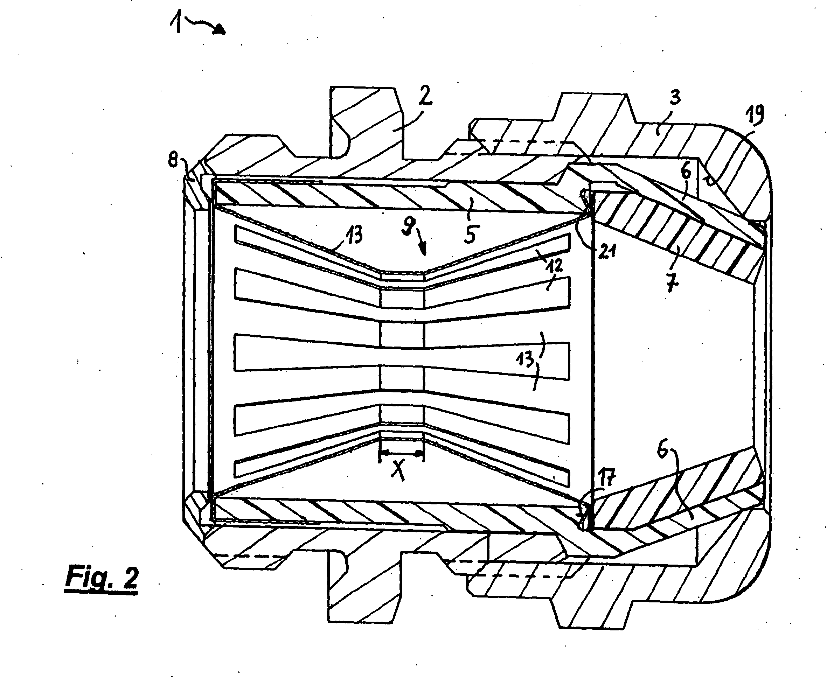

Fig. 2 zeigt nun den Querschnitt aus Fig. 1, aber mit voll aufgeschraubter Gegenhülse 3, also in der Stellung des Zusammenbaus, die für die Gegenhülse 3 in Fig. 1 strichpunktiert angegeben war.

Durch das Aufschrauben der Gegenhülse 3 auf die Aufnahmehülse 2 wandert die Gegenhülse 3 axial in Richtung auf den Verschlußring 8 hin.

Wie die Fig. 1 und 2 zeigen, ist an dem der Aufnahmehülse 2 abgewandten axialen Ende der Gegenhülse 3 in deren Innerem eine schräg liegende Ringfläche 19 ausgebildet, gegen welche die frei vorstehenden Enden der Klemmzungen 6 anliegen. Wandert beim Aufschrauben nun die Gegenhülse 3 und damit auch die Schrägfläche 19 axial in Richtung auf die Aufnahmehülse 2 hin, wird zunächst über den von der Schrägfläche 19 auf die Klemmzungen 6 ausgeübten Druck zunächst der gesamte Klemmring 5 axial in Richtung auf den Verschlußring 8 hin verschoben, und zwar solange, bis der axiale Abstand **A** verschwunden ist und die axiale Stirnfläche 18 des Klemmringes 5 gegen die zugewandte radiale Ringfläche der Erweiterung 14 des Lamellenkäfigs 9 zur Anlage kommt.

Da die Schrägfläche 19 jedoch auf die im Anlagebereich gerundet ausgeführten Klemmzungen 6 nicht nur eine axiale, sondern auch eine radiale Druckkomponente ausübt, werden dadurch die Klemmzungen 6 zusammen mit der in ihnen liegenden elastischen Ringdichtung 7 auch zunehmend radial nach innen verkippt. Dabei wird die wirkende axiale Druckkraft nicht nur auf die Klemmzungen 6, sondern auch auf die Ringdichtung 7 und über diese auf die anliegende Ringfläche 17 des Lamellenkäfigs 9 übertragen, so daß die bei den Klemmzungen 6 und der elastischen Ringdichtung 7 durch die Schrägfläche 19 der Gegenhülse 3 erzwungene Axialverschiebung auch auf die Ringfläche 17 des Lamellenkäfigs 9 übertragen wird.

Entsprechend wandert die Ringfläche 17 unter gleichzeitiger Verkürzung der axialen Gesamtlänge des Lamellenkäfigs 9, der sich dabei an seinem gegenüberliegenden axialen Ende am Verschlußring 8 abstützt, axial in Richtung auf den Verschlußring 8 hin, wobei durch diese axiale Bewegung die Lamellenstege 13 immer stärker radial nach innen ausgewölbt werden. Bei der in Fig. 2 gezeigten Schlußstellung des Aufschraubvorgangs der Gegenhülse 3 auf die Aufnahmehülse 2 ist dann eine zum Kontaktieren des Kontaktbereiches eines Kabels geeignete starke Auswölbung der Lamellenstege 13 radial nach innen hin erreicht, wobei gleichzeitig auch die Klemmzungen 6 und die elastische Ringdichtung 7 radial nach innen verkippt sind.

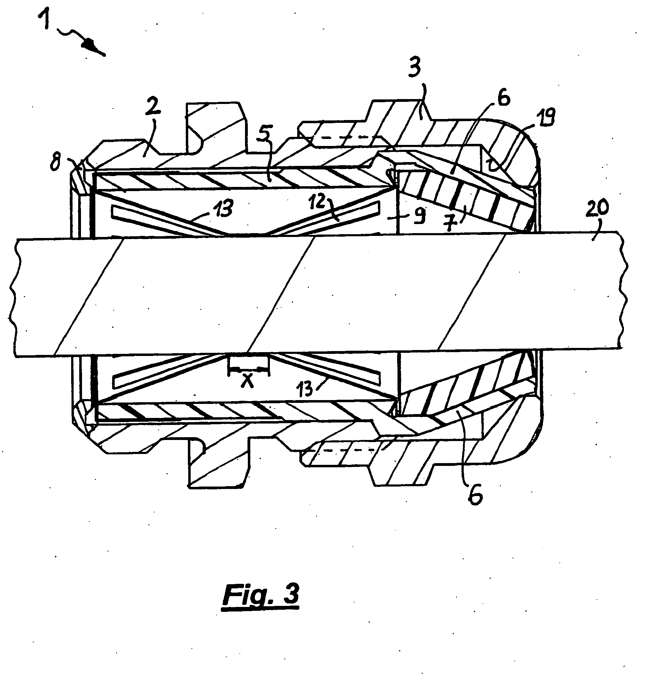

Fig. 3 zeigt nun die in Fig. 2 dargestellte Endstellung, wobei hier noch ein durch die Kabelverschraubung 1 hindurchgeführtes Kabel 20 (aber nur ganz prinzipiell) dargestellt ist. Dabei ist zeichnerisch nicht dargestellt, daß das Kabel 20 in dem Bereich, der im Abschnitt des Lamellenkäfigs 9, insbesondere in dem mittleren Bereich der Lamellenstege 13 liegt, abisoliert ist, so daß die am Kabel 20 in Abschnitt X anliegenden Lamellenstege 13 eine elektrische Kontaktierung sicherstellen. Gleichzeitig ist aus Fig. 3 ersichtlich, daß durch das Abbiegen der Klemmzungen 6 die elastische Ringdichtung 7 gegen den dort nicht abisolierten Außenumfang des Kabels 20 angedrückt wird, was dort zu einer Abdichtung und gleichzeitig zu einer gewünschten Druckentlastung führt.

Die elektrische Kontaktierung des Lamellenkäfigs 9 mit dem abisolierten Bereich des Kabels 20 findet um dessen gesamten Umfang herum über die Vielzahl der dort ringsum angeordneten Lamellenstege 13 statt, und dabei jeweils über einen flächigen mittleren Bereich einer Länge X, so daß sich die Kontaktierungskräfte über einen relativ großen Flächenbereich verteilen, wobei die Verteilung um den Ringumfang herum relativ gleichmäßig erfolgt.

Über den Kontaktierungsbereich X der Lamellenstege 13 mit dem Kabel 20 und den Lamellenkäfig 9 wird ein elektrischer Kontakt zu der radial äußeren Umfangsfläche des ebenfalls elektrisch leitenden Klemmringes 5 hergestellt, und über diesen ein solcher mit der aus Metall bestehenden Aufnahmehülse 2. Damit ist die gewünschte elektrische Verbindung zwischen dem Schirmgeflecht des Kabels und dem Verschraubungskörper der Kabelverschraubung hergestellt.

Durch eine geeignete Formgebung des Lamellenkäfigs 9, insbesondere der Lamellenstege 13, besteht die Möglichkeit, die Andruckverhältnisse in Kontaktierungsbereich X in Abhängigkeit von der axialen Verschiebung des Klemmringes 5 beim Aufschrauben der Gegenhülse 3 in gewünschter Weise zu beeinflussen. So besteht die Möglichkeit, z. B. die Lamellenstege 13 über ihre axiale Erstreckung hinweg entweder mit einer gleichmäßigen Dicke oder mit einer über deren axialen Verlauf hinweg variierenden Dicke zu versehen.

In gleicher Weise besteht die Möglichkeit, auch andere geometrische Größen der Lamellen in geeigneter Weise auszulegen: So können alle Lamellen z. B. über ihre gesamte axiale Erstreckung hinweg mit einer gleich großen Breite ausgeführt werden. Für bestimmte Einsatzfälle kann es aber auch vorteilhaft sein, die Lamellenstege 13 mit einer sich über ihren axialen Verlauf hinweg ändernden Breite auszuführen, wodurch wiederum ein gewünschtes Andruckverhalten in Abhängigkeit vom Aufschraubweg der Gegenhülse 3 erreicht werden kann. Daneben besteht ferner die (in den Figuren nicht dargestellte) Möglichkeit, schon im unbelasteten Zustand den Klemmring 5 mit seiner Stirnfläche 18 gegen die zugewandte radiale Ringfläche der Erweiterung 14 anliegen zu lassen, so daß hier anstelle des axialen Abstands A überhaupt kein Abstand vorliegt und damit beim Aufschrauben der Gegenhülse 3 der Klemmring 5 nicht mehr axial verschoben wird, sondern der gesamte beim Aufschrauben der Klemmhülse 3 entstehende axiale Verschiebeweg ausschließlich zum Verklappen der Klemmzungen 6 und der elastischen Ringdichtung 7 und (über letztere) zum Verkürzen der axialen Länge des Lamellenkäfigs 9 dient. In diesem Fall ist dann die elastische Ringdichtung 7 verschieblich innerhalb der Klemmzungen 6 anzubringen und sie darf erst am Ende des beim Aufschrauben der Gegenhülse 3 bewirkten Verschiebeweges gegen einen radialen Anschlag am Innenumfang des Klemmringes 5 zur Anlage kommen. Im unbelasteten Zustand der Kabelverschraubung 1 steht in diesem Fall dann die elastische Ringdichtung z. B. axial über die dortige Endfläche der Klemmzungen 6 vor, so daß die schräge Ringfläche 17 innen an der Gegenhülse 3 zuerst mit der elastischen Ringdichtung 7 in Kontakt kommt und diese dann axial innerhalb der Klemmzungen 6 verschiebt, wobei das Kippen der Klemmzungen 6 mit der Ringdichtung 7 erst zu einem Zeitpunkt ausgelöst wird, bei dem die Ringdichtung 7 schon axial in die Klemmzungen 6 hinein verschoben wurde.

Benötigt man eine Kabelverschraubung 1, bei welcher die elektrische Kontaktierung nicht erforderlich ist, dann besteht die einfache Möglichkeit, die Konstruktion der dargestellten Kabelverschraubung 1 so abzuändern, daß man nur den Lamellenkäfig 9 daraus entfernt, wonach eine modifizierte Kabelverbindung entsteht, die ohne die elektrische Verbindung sogleich eingesetzt werden kann. In diesem Fall ist es dann aber von Vorteil, wenn der Aufbau der Kabelverbindung 1 so gewählt ist, daß von vorneherein der Klemmring 5 nicht verschieblich innerhalb der Aufnahmehülse 2 sitzt.

## Patentansprüche

1. Kabelverschraubung (1) mit einer elektrisch leitenden Aufnahmehülse (2) und einer auf diese aufschraubbaren Gegenhülse (3), insbesondere einem Druckelement, und mit einem Klemmring (5) mit in Umfangsrichtung nebeneinander angeordneten, voneinander jeweils durch einen Schlitz getrennten Klemmzungen (6), die an ihren freien Enden beim Aufschrauben der Gegenhülse (3) auf die Aufnahmehülse (2) verkippt werden, wobei durch das Verkippen der Klemmzungen (6) ein elastisches ringförmiges Dichtelement (7) gegen die Außenfläche des Kabels (20) dichtend anpreßbar und beim Aufschrauben der Gegenhülse (3) über das Dichtelement (7) ein axialer Druck auf den zugewandten Endbereich (11; 17) des Lamellenkäfigs (9) aufbringbar ist, und mit einem im Inneren der Aufnahmehülse (2) angebrachten, elektrisch leitfähigen Kontaktelement (9), das mit der Aufnahmehülse (2) in elektrisch leitender Verbindung steht und als ein Lamellenkäfig (9) mit jeweils einem ringförmigen Endbereich (10; 14; 11; 17) an beiden axialen Enden ausgebildet ist, wobei die ringförmigen Endbereiche (10; 14; 11; 17) in axialer Richtung über in Umfangsrichtung nebeneinander liegende, durch axial verlaufende Schlitze (12) voneinander getrennte, radial elastisch einfederbare Lamellenstege (13) miteinander verbunden sind, die im unbelasteten Zustand des Lamellenkäfigs (9) über ihren axialen Verlauf hinweg eine radial nach innen gerichtete Einwölbung ausbilden, wobei sich der Lamellenkäfig (9) an seinem der Gegenhülse (3) zugewandten Endbereich (11; 17) axial gegen das elastische Dichtelement (7) abstützt, über das beim Aufschrauben der Gegenhülse (3) ein axial gerichteter Druck auf den sich an ihm abstützenden Endbereich (11; 17) des Lamellenkäfigs (9) aufbringbar ist, durch den sich die axiale Länge des Lamellenkäfigs (9) unter Vergrößerung der Einwölbung der elastisch einfederbaren Lamellenstege (13) verringert und der Lamellenkäfig (9) mit einem Schirm- oder Erdungskontakt eines durch die Kabelverschraubung (1) hindurchgeführten Kabels (20) in Kontakt bringbar ist,
**dadurch gekennzeichnet, daß**
der Klemmring (5) in der Aufnahmehülse (2) sitzt, der Lamellenkäfig (9) im Klemmring (5) angeordnet ist und der Klemmring (5) auf seiner der Gegenhülse (3) zugewandten Seite einen aus der Aufnahmehülse (2) vorstehenden Abschnitt aufweist, der in das Innere der Gegenhülse (3) axial hineinragt und dort die Klemmzungen (6) als axial ausgerichtete sowie voneinander durch bis zu seinem vorstehenden axialen Ende verlaufende Schlitze getrennte Klemmzungen (6) mit frei vorstehenden Enden ausbildet, wobei das Dichtelement (7) radial innerhalb der Klemmzungen (6) sitzt, die Klemmzungen (6) beim Aufschrauben der Gegenhülse (3) von dieser unter Verkleinerung der Schlitze (12) zwischen ihnen mit ihren freien Enden radial nach innen verkippt werden und **dadurch** über das Dichtelement (7) ein axialer Druck auf den zugewandten Endbereich (17) des Lamellenkäfigs (9) aufbringbar ist.

2. Kabelverschraubung nach Anspruch 1, **dadurch gekennzeichnet, daß** der Lamellenkäfig (9) aus einem metallischen Werkstoff besteht.

3. Kabelverschraubung nach Anspruch 1 oder 2, **dadurch gekennzeichnet, daß** der Klemmring aus einem Kunststoff mit einer Metallbeschichtung, vorzugsweise durch Metallbedampfung, besteht.

4. Kabelverschraubung nach Anspruch 2 oder 3, **dadurch gekennzeichnet, daß** der Klemmring (5) aus verzinntem Kunststoff besteht.

5. Kabelverschraubung nach einem der Ansprüche 1 bis 4, **dadurch gekennzeichnet, daß** das ringförmige Dichtelement (7) aus Neopren oder aus TPE besteht.

6. Kabelverschraubung nach einem der Ansprüche 1 bis 5, **dadurch gekennzeichnet, daß** der Lamellenkäfig (9) an seiner der Gegenhülse (3) abgewandten Stirnseite eine radiale, ringförmige Erweiterung (14) aufweist, mit welcher er die zugeordnete axiale Stirnseite (18) des Klemmringes (5) radial überdeckt, wobei diese Erweiterung (14) an ihrem radial äußeren. Ende in einen in Richtung auf die Gegenhülse (3) laufenden zylindrischen Abschnitt (X) übergeht, welcher zwischen der Außenumfangsfläche des Klemmringes (5) und der Innenumfangsfläche der Aufnahmehülse (2) angeordnet ist.

7. Kabelverschraubung nach einem der Ansprüche 1. bis 6, **dadurch gekennzeichnet, daß**, die Lamellenstege (13) eine gleiche Breite aufweisen.

8. Kabelverschraubung nach einem der Ansprüche 1 bis 7, **dadurch gekennzeichnet, daß** jeder Lamellensteg (13) eine über seine axiale Länge hinweg konstante Stegdicke aufweist.

9. Kabelverschraubung nach einem der Ansprüche 1 bis 8, **dadurch gekennzeichnet, daß** alle Lamellenstege (13) in axialer Richtung gesehen einen mittleren Bereich (X) größter radialer Einbuchtung aufweisen.

10. Kabelverschraubung nach Anspruch 9, **dadurch gekennzeichnet, daß** der mittlere Bereich größter radialer Einbuchtung aller Lamellenstege (13) einen in axialer Richtung zylindrischen Lamellensteg-Abschnitt (X) umfaßt.

11. Kabelverschraubung nach einem der Ansprüche 1 bis 10, **dadurch gekennzeichnet, daß** beim Aufschrauben der Gegenhülse (3) durch diese das Dichtungselement (7) zusammen mit dem Klemmring (5) Innerhalb der Aufnahmehülse (2) axial über einen Bereich (A) verschieblich ist, welcher der Länge der Verkürzung des Lamellenkäfigs (9) bei voll aufgeschraubter Gegenhülse (3) entspricht.

12. Kabelverschraubung nach einem der Ansprüche 1 bis 10, **dadurch gekennzeichnet, daß** der Klemmring (5) in der Aufnahmehülse (2) axial unverschieblich sitzt und das Dichtelement (7) in ihm axial verschieblich angeordnet ist.

## Claims

1. Cable gland (1) with an electrically conducting retaining sleeve (2) and a counter sleeve (3) which may be screwed on to this, in particular a pressure element, and with a locking ring (5) with retaining tongues (6) arranged adjacent to one another in the circumferential direction and separated from each other by a slot, said tongues being tipped onto the retaining sleeve (2) at their free ends on screwing on of the counter sleeve (3) and an elastic, annular sealing element (7) which presses against and makes a seal to the outer surface of the cable (20) by tipping the retaining tongues (6) and with an electrically conductive contact element (9) mounted inside the retaining sleeve (2) which element is in electrically conducting connection with the retaining sleeve (2) and takes the form of a lamella cage (9) with an annular end section (10; 14; 11; 17) at each axial end, with the annular end sections (10; 14; 11; 17) being connected together in the axial direction by means of lamella bars (13) that are radially elastically sprung and are located adjacent to one another in the circumferential direction and separated from one another by axially running slots (12), and which bars in the unloaded state of the lamella cage (9) form a radially internally directed concave curvature over their axial course, wherein the lamella cage (9) is supported at its end section (11; 17) facing the counter sleeve (3) axially against the elastic sealing element (7) through which on screwing on of the counter sleeve (3) an axially directed pressure may be applied to the end section (11; 17) of the lamella cage (9) supporting itself on it, as a result of which the axial length of the lamella cage (9) reduces with the increase in the curvature of the elastically sprung lamella bars (13) and the lamella cage (9) may be brought into contact with a shielding or earthing contact of a cable (20) passed through the cable gland (1),
**characterised in that**
the locking ring (5) sits in the retaining sleeve (2), the lamella cage (9) is mounted in the locking ring (5) and the locking ring (5) comprises a section on its side facing the counter sleeve (3) that projects out of the retaining sleeve (2) and which protrudes into the interior of the counter sleeve (3) axially and there forms the retaining tongues (6) as axially aligned retaining tongues (6) with freely projecting ends separated from one another by slots running to the projecting axial end, wherein the sealing element (7) sits radially inside the retaining tongues, the retaining tongues being tipped radially inwards by the counter sleeve (3) when said sleeve is screwed on with the slots (12) between said tongues becoming smaller and hence being able to apply an axial pressure on the facing end section (17) of the lamella cage (9) by way of the sealing element (7).

2. Cable gland in accordance with claim 1, **characterised in that** the lamella cage (9) consists of a metallic material.

3. Cable gland in accordance with claim 1 or 2, **characterised in that** the locking ring consists of a plastic with a metal coating, preferably applied by metal vapour deposition.

4. Cable gland in accordance with claim 2 or 3, **characterised in that** the locking ring (5) consists of tin-plated plastic.

5. Cable gland in accordance with one of the claims 1 to 4, **characterised in that** the annular sealing element (7) consists of neoprene or TPE.

6. Cable gland in accordance with one of the claims 1 to 5, **characterised in that** the lamella cage (9) comprises on its end face opposite the counter sleeve (3) a radial, annular expansion (14) with which it radially covers the associated axial end face (18) of the locking ring (5), wherein this expansion (14) transitions at its radially external end into a cylindrical section (X) running towards the counter sleeve (3) which section is arranged between the external circumferential surface of the locking ring (5) and the inner circumferential face of the retaining sleeve (2).

7. Cable gland in accordance with one of the claims 1 to 6, **characterised in that** the lamella bars (13) are of the same width.

8. Cable gland in accordance with one of the claims 1 to 7, **characterised in that** each lamella bar (13) comprises a constant bar thickness along its axial length.

9. Cable gland in accordance with one of the claims 1 to 8, **characterised in that** all lamella bars (13) comprise a middle section (X) of greatest radial indentation seen in the axial direction.

10. Cable gland in accordance with claim 9, **characterised in that** the middle section of the greatest radial indentation for all lamella bars (13) comprises a lamella bar section (X) cylindrical in the axial direction.

11. Cable gland in accordance with one of the claims 1 to 10, **characterised in that** on screwing on of the counter sleeve (3) the sealing element (7) together with the locking ring (5) is displaceable by said sleeve within the retaining sleeve (2) axially over a section (A) which corresponds to the length by which the lamella cage (9) is shortened when the counter sleeve (3) is screwed on fully.

12. Cable gland in accordance with one of the claims 1 to 10, **characterised in that** the locking ring (5) sits undisplaceably in the retaining sleeve (2) and the sealing element (7) is arranged axially displaceably in said ring.

## Revendications

1. Fixation à vis pour câbles (1) avec une douille de réception (2) conduisant l'électricité et une (3) pouvant être vissée sur elle, notamment un élément de pression et avec une bague de serrage (5) pourvue de languettes de serrage (6) disposées les unes à côté des autres sur la périphérie et séparées chaque fois par une fente, qui sont basculées à leurs extrémités libres par le vissage de la contre douille (3) sur la douille de réception (2), et un élément d'étanchéité annulaire élastique (7) qui peut être pressé de façon étanche contre la surface extérieure du câble (20) du fait du basculement des languettes de serrage (6) et un élément de contact (9) électriquement conducteur disposé à l'intérieur de la douille de réception (2) qui est en liaison de conduction électrique avec la douille de réception (2) et qui est formée par une cage en lamelles (9) présentant une zone terminale annulaire (10, 14 ; 11, 17) à chacune des deux extrémités axiales, les zone terminale annulaire (10, 14 ; 11, 17) étant reliées entre elles dans la direction axiale au moyen de barrettes en lamelle (13) disposées à côté les unes des autres sur la périphérie, séparées par des fentes (12) s'étendant axialement, pouvant céder élastiquement dans le sens radial qui forment dans l'état non chargé de la cage en lamelles (9) un bombement radial vers l'intérieur sur leur étendue axiale, la cage en lamelles (9) s'appuyant axialement, par sa zone terminale (11, 17) tournée vers la contre douille (3), contre l'élément d'étanchéité (7) par lequel une pression est exercée dans le sens axial sur les zones terminales (11, 17) de la cage en lamelles (9) qui s'appuie sur lui, lorsque la contre douille est vissée, par laquelle la longueur axiale de la cage en lamelles (9) diminue avec une accentuation du bombement des barrettes en lamelle (13) qui cèdent élastiquement et la cage en lamelles (9) pouvant être mise en contact avec un blindage ou une mise à la terre d'un câble (20) conduit à travers le raccordement à vis pour câbles,
**caractérisée en ce que**
la bague de serrage (5) se trouve dans la douille de réception (2), la cage en lamelles (9) est disposée dans la bague de serrage (5) et la bague de serrage (5) présente, sur son côté tourné vers la contre douille (3), une section faisant saillie de la douille de réception (2) qui pénètre axialement à l'intérieur de la contre douille (3) et y forme les languettes de serrage (6), avec des extrémités avant libres, comme des languettes de serrage (6) dirigées axialement et séparées les unes des autres par des fentes s'étendant jusqu'à son extrémité axiale avant, l'élément d'étanchéité (7) reposant radialement à l'intérieur des languettes de serrage (6), les extrémités libres des languettes de serrage (6) étant, lors du vissage de la contre douille (3), basculées radialement vers l'intérieur par celles-ci, par rétrécissement des fentes (12) entre elles et une pression axiale étant exercée à travers l'élément d'étanchéité (7) sur les zones d'extrémité (17) tournées vers lui de la cage en lamelles (9).

2. Fixation à vis pour câbles selon la revendication 1, **caractérisée en ce que** la cage en lamelles (9) est en un matériau métallique.

3. Fixation à vis pour câbles selon la revendication 1 ou 2, **caractérisée en ce que** la bague de serrage est réalisée en matière plastique avec revêtement métallique, de préférence par un dépôt métallique par évaporation

4. Fixation à vis pour câbles selon la revendication 2 ou 3, **caractérisée en ce que** la bague de serrage (5) est réalisée en matière plastique étamée.

5. Fixation à vis pour câbles selon l'une des revendications 1 à 4, **caractérisée en ce que** l'élément d'étanchéité annulaire (7) est en Néoprène ou en TPE.

6. Fixation à vis pour câbles selon l'une des revendications 1 à 5, **caractérisée en ce que** la cage en lamelles (9) présente, sur son côté frontal opposé à la contre douille (3), un élargissement radial (14) avec lequel avec laquelle elle recouvre radialement le côté frontal axial (18) correspondant de la bague de serrage (5), cet élargissement (14) évoluant, à son extrémité radialement extérieure, en une section cylindrique (X) s'étendant en direction de la contre douille (3) qui est située entre la surface périphérique externe de la bague de serrage (5) et la surface périphérique interne de la douille de réception (2).

7. Fixation à vis pour câbles selon l'une des revendications 1 à 6, **caractérisée en ce que** les barrettes en lamelle (13) présentent une même largeur.

8. Fixation à vis pour câbles selon l'une des revendications 1 à 7, **caractérisée en ce que** chaque barrette en lamelle (13) présente une épaisseur constante tout au long de sa longueur axiale.

9. Fixation à vis pour câbles selon l'une des revendications 1 à 7, **caractérisée en ce que** toutes les barrettes en lamelle (13) présentent ,vu en direction axiale, une zone intermédiaire (X) de plus grand retrait.

10. Fixation à vis pour câbles selon la revendication 9, **caractérisée en ce que** la zone intermédiaire de plus grand retrait de toute les barrettes en lamelle (13) comprend en direction axiale une section de barrette en lamelle (X).

11. Fixation à vis pour câbles selon l'une des revendications 1 à 10, **caractérisée en ce que** lors du vissage de la contre douille (3), l'élément d'étanchéité (7) peut être, ensemble avec la bague de serrage (5), décalé par celle-ci à l'intérieur de la douille de réception (2) sur une zone (A) qui correspond à la longueur du raccourcissement de la cage en lamelles (9) lorsque la contre douille (3) est complètement vissée.

12. Fixation à vis pour câbles selon l'une des revendications 1 à 10, **caractérisée en ce que** la bague de serrage (5) est montée non déplaçable axialement dans la douille de réception (2) et **en ce que** l'élément d'étanchéité (7) est disposé dans elle déplaçable axialement.
